Europäisches Patentamt

European Patent Office

Office européen des brevets

(11) Publication number: **0 687 814 A2**

# EUROPEAN PATENT APPLICATION

(21) Application number: **95105506.0**

(22) Date of filing: **12.04.95**

(51) Int. Cl.6: **F04B 1/04**, F04B 9/04

(30) Priority: **25.05.94 JP 111208/94**

(43) Date of publication of application:
**20.12.95 Bulletin 95/51**

(84) Designated Contracting States:
**DE FR GB IT**

(71) Applicant: **SUMITOMO ELECTRIC INDUSTRIES, LIMITED**
**5-33, Kitahama 4-chome**
**Chuo-ku**
**Osaka 541 (JP)**

(72) Inventor: **Takata, Koji, c/o Itami Works**
**Sumimoto Elec. Ind. Ltd.,**
**1-1, Koyakita 1-chome**
**Itami-shi,**
**Hyogo (JP)**

(74) Representative: **Eder, Thomas, Dr.-Ing.**
**Eder & Schieschke,**
**Patentanwälte,**
**Elisabethstrasse 34**
**D-80796 München (DE)**

(54) **Plunger pump**

(57) Plunger pump which has reduced noise and vibration and has a plunger case having increased durability.

It has an eccentric drive shaft (3) and at least one plunger (4,5) kept in abutment with the eccentric drive shaft (3) and adapted to be driven to produce fluid pressure when the eccentric drive shaft (3) is rotated. The axis of the plunger (4,5) is offset by a predetermined distance from the center of rotation of the eccentric drive shaft (3) in a direction perpendicular to the axis of the plunger.

FIG. 1

Rank Xerox (UK) Business Services
(3.10/3.09/3.3.4)

This invention relates to an improved plunger pump for use as a fluid pressure source in an antilock brake system.

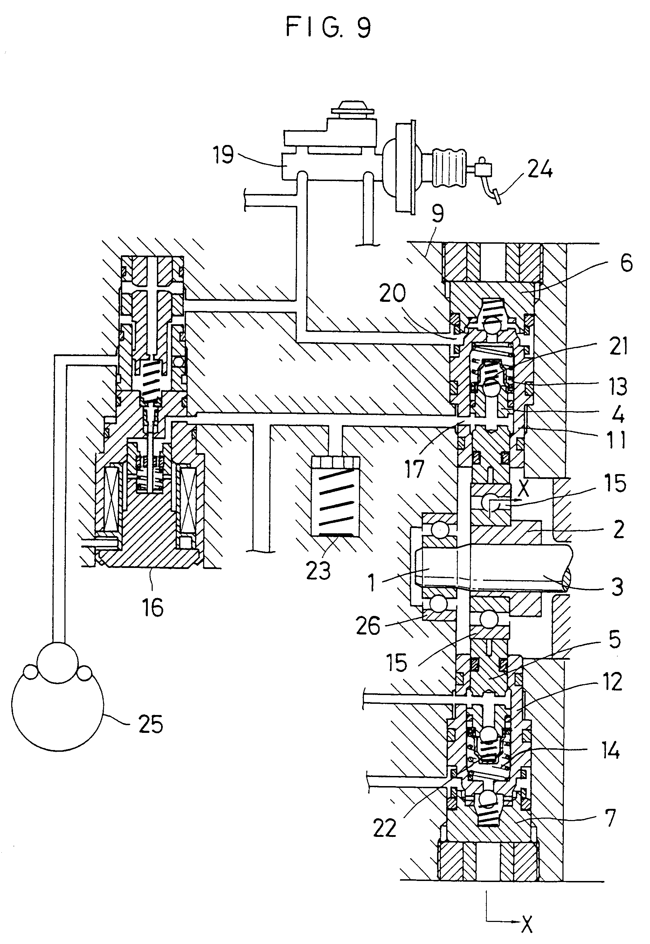

Fig. 9 shows a conventional plunger pump used as a fluid pressure source in an antilock brake system. It includes a motor (not shown) having a rotary shaft 1. A coupling ring 2 and an eccentric bearing 15 are mounted on the shaft 1 near its tip to form an eccentric drive shaft 3. A pair of plungers 4 and 5 are provided at diametrically opposite sides of the eccentric drive shaft 3.

These plungers 4, 5 are slidably mounted in plunger cases 11, 12 provided in front of a pump housing 9 of the antilock brake system by means of plunger plugs 6, 7, respectively. Return springs 13, 14 are mounted between the plungers 4, 5 and the plunger cases 11, 12 to urge the plungers 4, 5 and keep their tips in abutment with the eccentric bearing 15 mounted on the coupling ring 2.

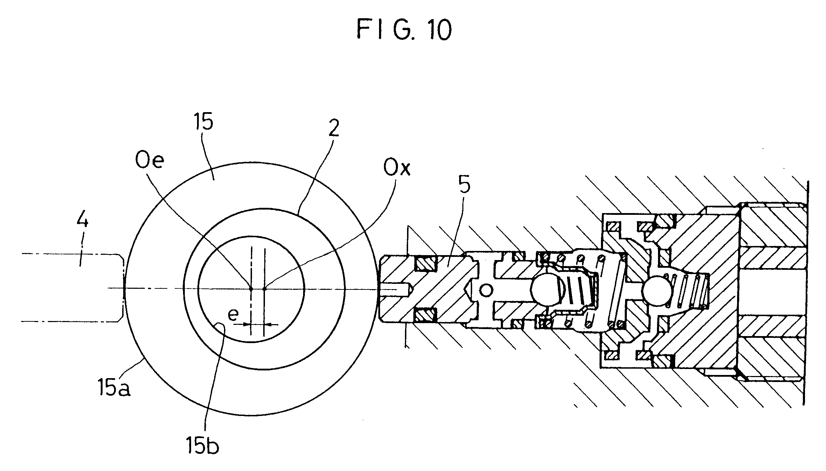

As shown in Fig. 10, which is a sectional view taken along line X-X of Fig. 9 and viewed in the direction of arrows, the rotary shaft 1 to which the driving force of the motor is transmitted, is arranged so that its central axis intersects the central axis of the plungers 4 and 5. The eccentric bearing 15, which rotates about the axis of the rotary shaft 1, is arranged such that the pump pressure begins to increase when its eccentricity becomes $e$. In the figure, Ox represents the center of rotation of the bearing 15. Oe is the center of the coupling ring 2. Fig. 10 is somewhat simplified for easy understanding. It only shows the sections of the outer periphery 15a and inner periphery 15b of the eccentric bearing 15, coupling ring 2 and drive shaft 1.

In such a plunger pump, when the eccentric drive shaft 3 rotates, the plungers 4 and 5 are reciprocated in the plunger cases 11, 12 as the coupling ring 2 rotates.

Thus, by activating the motor to reciprocate the plungers 4, 5 while the antilock brake system is in the antilock control mode, hydraulic fluid is sucked in through an inlet port 17 connected to a discharge valve 16 of the antilock brake system, compressed to a high pressure in spring chambers 21, 22, and discharged through a discharge port 20 connected to a master cylinder 19. Numeral 23 in Fig. 9 indicates a hydraulic fluid reservoir, 24 does a the brake pedal, and 25 does a wheel brake.

In this conventional plunger pump, the drive shaft 3 is arranged so that its central axis intersects the extension lines of the axes of the plungers. Thus, throughout the pressurizing stroke, i.e. from the beginning of stroke to its end, the drive shaft 3 acts on each plunger only on one side of the axis of the plungers (i.e. the side which receives the rotation of the drive shaft).

Considering now the balance of forces that act on the plungers, they receive a moment which is given by the product of the discharge pressure and the sectional area of each plunger multiplied by the distance between the axis of drive shaft and the contact point between the plunger and the drive shaft. This moment acts as a force that tends to rotate the plungers about their centers of gravity. However, the plungers never actually rotate because they are supported by the plunger cases. As a result, a compressive force as a reaction force to the moment applied to the plungers is constantly acting on the plunger cases from one direction. This means that the plungers are kept in slide contact with the plunger cases while compressing them. Thus, in the worst case, the case surfaces could suffer frictional damage.

Also, each plunger has an outer peripheral surface extending substantially parallel to the inner surface of the plunger case. Thus, due to eccentric loads that act on the plunger, the surface of the plunger or the plunger case tends to be abraded by the mating surface. This lowers the durability of the plunger or the plunger case.

An object of this invention is to provide a plunger pump which has a more durable plunger case and which is less likely to produce vibration and noise resulting from friction between the plunger and the plunger case.

Another object of this invention is to reduce the abrasion of the plunger resulting from eccentric load and to reduce vibration and noise.

In order to achieve the first object, the present invention provides a plunger pump comprising an eccentric drive shaft and at least one plunger kept in abutment with the eccentric drive shaft and adapted to be driven to produce fluid pressure when the eccentric drive shaft is rotated, characterized in that the axis of the plunger is offset by a predetermined distance from the center of rotation of the eccentric drive shaft in a direction perpendicular to the axis of the plunger.

According to this arrangement, it is possible to reduce the forces from acting on the plunger case only to one side of the plunger axis. Thus, the moment is reduced by half and the surface pressure on the plunger case is also reduced by half. This makes it possible to dramatically reduce vibrations and noise resulting from friction between the plunger and the plunger case.

Preferably, the predetermined distance should be $e/2$, wherein $e$ is the eccentricity of the eccentric drive shaft. This offset amount is advantageous if reducing the momentary maximum force is effective to increase durability of the plunger case and reduce vibrations and noise.

Otherwise, the predetermined distance may be $2e/\pi$, wherein $e$ is the eccentricity of the eccentric drive shaft. This offset amount is advantageous to uniformly distribute forces to both sides of the plunger axis. The figure $2e/\pi$ is obtained in the following manner.

The moment F that tends to tip the plunger is given by the formula:

$$F = PAe \cdot \sin\theta$$

wherein P is the fluid pressure applied to the plunger, A is the sectional area of the plunger, and $e$ is the eccentricity of the eccentric drive shaft. In this case, P and A are not functions of $\theta$ but constant. Thus, F changes with $e\sin\theta$.

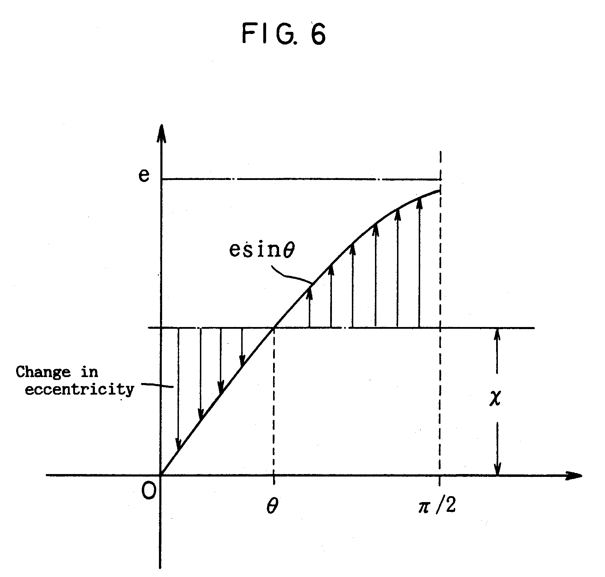

The distance between the rotation center of the eccentric drive shaft and the point of application of force of the plunger is given by $(x - e\sin\theta)$, wherein x is the offset amount. This relation is shown in Fig. 6. In order to uniformly distribute forces to both sides of the plunger axis, the areas of the upper and lower portions represented by arrows have to be equal.

The offset amount that satisfies this condition is $2e/\pi$, which is given by the following formula:

$$X - \left( \int_{0}^{\pi/2} e\sin\theta \, d\theta \right) \Big/ \frac{\pi}{2} = \left\{ e \left[ -\cos\theta \right]_{0}^{\pi/2} \right\} \Big/ \pi/2$$

$$= 2e/\pi$$

If the momentary maximum force is effective, however, the offset amount should be $e/2$.

The plunger pump according to the present invention may comprise a second plunger provided on a diametrically opposite side of the eccentric drive shaft from the at least one plunger and kept in abutment with the eccentric drive shaft, the axes of the plungers being offset by predetermined distances from the center of rotation of the eccentric drive shaft to one side from which the plungers meet the eccentric drive shaft when the eccentric drive shaft rotates.

In this arrangement, a pair of plungers are provided on diametrically opposite sides of the eccentric drive shaft. They are offset in phase by 180° from each other. The function of each plunger is exactly the same as that of the plunger in the arrangement in which a single plunger is provided.

In this case, the predetermined distance for one plunger may be substantially equal to that for the other plunger to increase durability of the plunger case and reduce vibration and noise of the pump.

In order to improve the durability of the pump, the plunger should have at least one end narrowed or tapered to reduced diameter. Thus, even if eccentric loads acts on the plunger while the plunger is in operation, the edge of the plunger case is kept out of contact with the sliding surface of the plunger. Thus, the durability of the plunger improves greatly because it can reciprocate smoothly in the plunger cases.

Otherwise, a plunger case in which the plunger is slidably mounted may be beveled at near its opening. Thus, the edge of the plunger case is kept out of contact with the sliding surface of the plunger, so that the plunger can reciprocate smoothly.

As a means to attain the second object, there is provided a plunger pump comprising an eccentric shaft and at least one plunger kept in abutment with the eccentric drive shaft and adapted to be driven to produce fluid pressure when the eccentric drive shaft is rotated, the plunger having at least one end narrowed or tapered to reduced diameter.

Also, as another means to attain the second object, there is provided a plunger pump comprising an eccentric shaft and at least one plunger kept in abutment with the eccentric drive shaft and adapted to be driven to produce fluid pressure when the eccentric drive shaft is rotated, wherein a plunger case in which the plunger is slidably mounted is beveled at near its opening.

Other features and objects of the present invention will become apparent from the following description made with reference to the accompanying drawings, in which:

Fig. 1 is a partial sectional view of a plunger pump of one embodiment;

Fig. 2 is a partial enlarged view of the same;

Fig. 3 is a view explaining its operation;

Figs. 4A - 4E are views which show the positional relation for respective phase angles;

Figs. 5A - 5E are views similar to Fig. 4 showing the positional relation in a conventional arrangement;

Fig. 6 is a graph used to determine the offset amount of the plunger relative to the eccentric drive shaft;

Figs. 7A and 7B are schematic sectional views of a modified embodiment in which the plunger and the plunger case have modified end shapes;

Figs. 8A and 8B are schematic sectional views of another modified embodiment in which the plunger has modified end shapes;

Fig. 9 is a schematic view of an entire hydraulic circuit including a conventional plunger pump; and

Fig. 10 are a partial sectional view of the conventional plunger pump.

Now description is made of embodiments of the present invention with reference to the drawings.

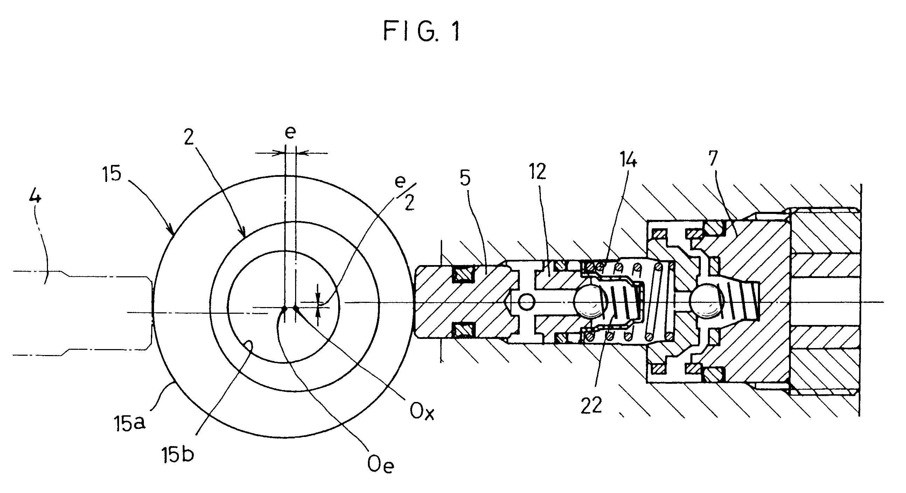

The plunger pumps of the embodiments are substantially the same structure as the conventional plunger pump. Thus, we shall not show the entire structure of the plunger pump. Fig. 1 shows only the portion of the plunger pump that is different from the conventional pump. The arrangement shown in Fig. 1 differs from the prior arrangement in the position of the center Ox of rotation of the eccentric drive shaft 3. Other functional elements that are the same as those of the conventional pump shown in Fig. 9 are denoted by the same numerals and their description is omitted. Also, similar to Fig. 9, Fig. 1 is a somewhat simplified view.

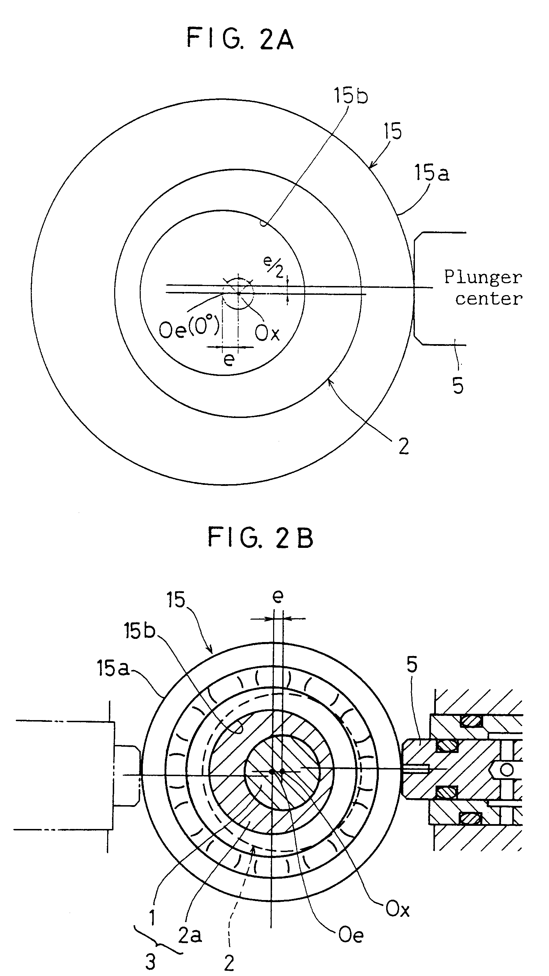

In this embodiment, as shown in the figures, the axes of the plungers 4, 5 are offset from the center of rotation Ox of the eccentric drive shaft 3 by half the eccentricity $e$ of the eccentric drive shaft 3 in a direction perpendicular to the axis of the plungers. Fig. 2 is an enlarged view of the contact portion between the eccentric drive shaft 3 and one of the plungers 4, 5. The dashed line in Fig. 2 indicates the locus of the center of eccentricity Oe when the eccentric shaft 3 rotates. Figs. 1 and 2 show the phase state wherein the righthand plunger 5 is about to begin its pressurizing stroke.

The operation of the plunger pump of this embodiment is as follows:

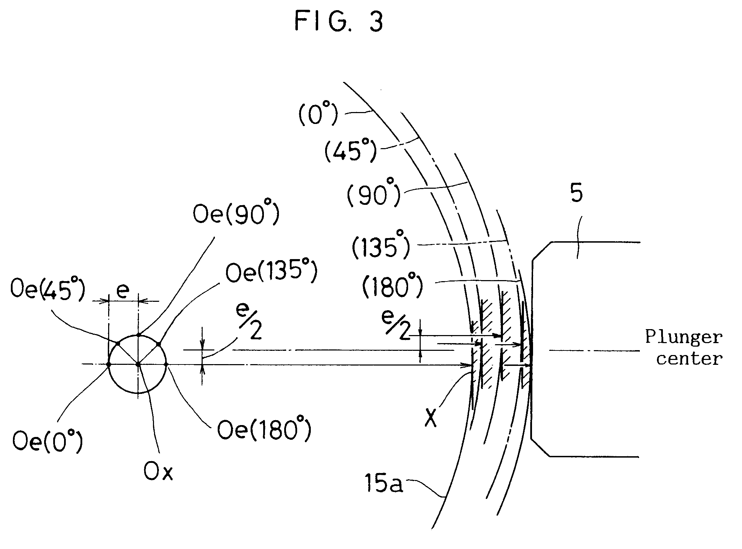

Fig. 3 shows how the center of eccentricity Oe and the plunger 5 move as the eccentric drive shaft 3 rotates from the beginning to end of the pressurizing stroke. The figure in the bracket following Oe indicates the angle of rotation from the beginning of pressurizing stroke. The arrows indicate the urging forces applied to the contact point X between the plunger 5 and the eccentric bearing 15.

As shown in this figure, as the center of eccentricity Oe moves from 0° - 180° around the center Ox of rotation, the contact point X moves upwards and then downwards in this figure, while the plunger 5 is pushed rightwardly by the distance 2e, i.e. twice the eccentricity $e$, increasing the fluid pressure.

As the angle of rotation changes from 0° - 180°, the contact point X moves as shown by arrows in Fig. 3. Namely, the contact point X moves between the level $e/2$ below the axis of the plunger 5 and the level $e/2$ above its axis. This means that the maximum distance between the contact point X and the axis of the plunger 5 is $e/2$. In the prior arrangement, such maximum distance was $e$. Thus, with the arrangement of this embodiment, it is possible to reduce the maximum moment that acts on the plunger by half compared with the prior arrangement, because the moment applied to the plunger is proportional to the distance between the contact point X and the plunger axis.

Since the contact point X moves equally by $e/2$ below and above the plunger axis, the plunger is pressed uniformly against the right and left inner walls of the plunger case. Thus, the friction between the plunger and the inner wall of the plunger case also decreases by half, so that it is possible to dramatically reduce vibrations and noise resulting from the friction of the plunger against the plunger case.

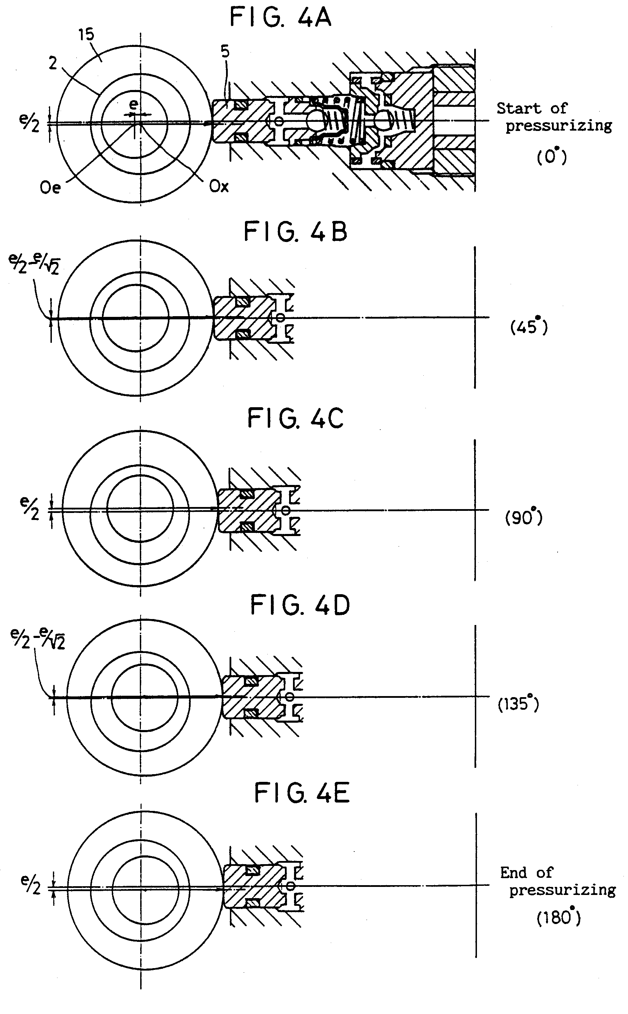

Figs. 4A - 4E show the relation between the phase angle of the eccentric drive shaft 3 and its position relative to the plunger. More specifically, Figs. 4A - 4E show the states when the phase angle $\theta$ of the shaft 3 is 0 (at the beginning of pressurizing stroke), $\pi/4$ (45°), $\pi/2$ (90°), $3/4\pi$(135°) and $\pi$(180°) (at the end of pressurizing stroke), respectively.

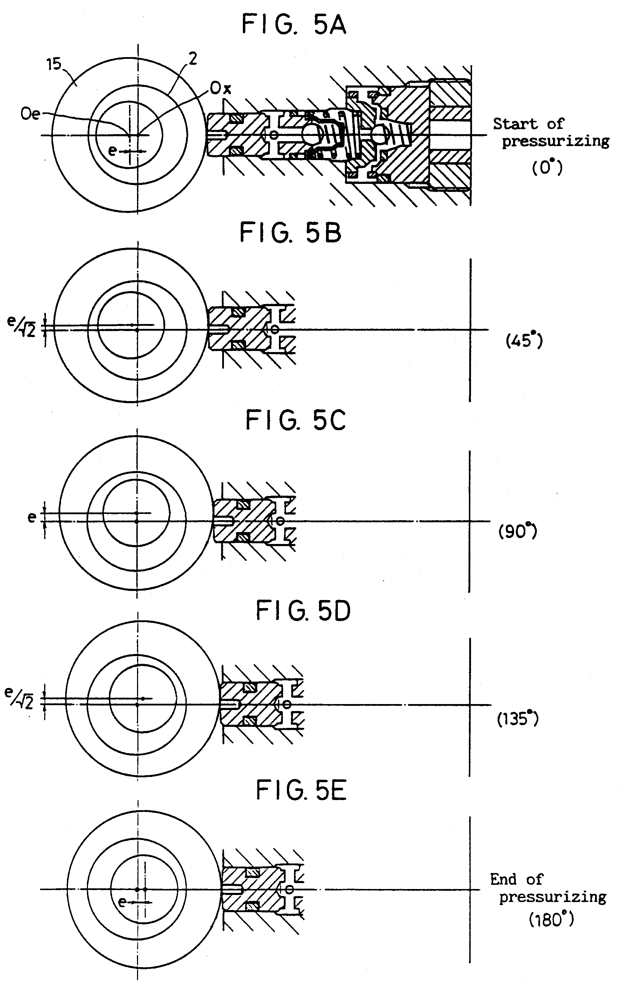

Figs. 5A - 5E are views for a conventional plunger pump, similar to Figs. 4A - 4E. The phase angles in Figs. 5A to 5E correspond to those in Figs. 4A to 4E. As will be apparent from Figs. 5, the contact point X is offset by a maximum distance of $e$ from the plunger axis to one side when $\theta = \pi/2$(90°).

The plunger pump of this embodiment has a pair of plungers. But the concept of the invention is equally applicable to a pump having a single plunger or more than two plungers.

Also, in the above embodiment, the axis of the plunger is offset by $e/2$ from the axis of the center of the shaft. But the offset amount is not limited to $e/2$ but may be e.g. $2e/\pi$ so that the forces that act on both sides of the plunger case with respect to the axis of the plunger will be equal to each other.

Also, such offset amount may be determined by accurately calculating the force that urges the plunger case while taking into account the length of the portion of the plunger protruding from the plunger case.

If the pump has a plurality of plungers, the respective plungers may be offset from the center of drive shaft by different distances, taking into consideration e.g. the gravity that acts on each plunger or from the manufacturing aspect.

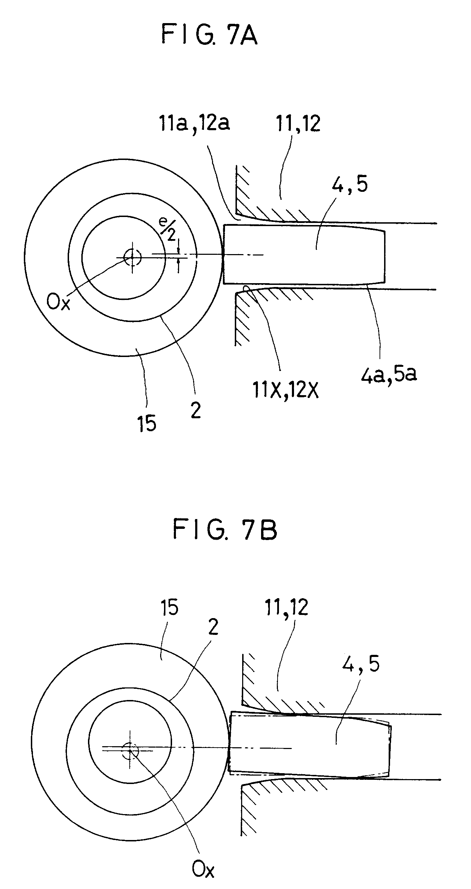

Figs. 7A and 7B show a modified embodiment in which the plunger and the end of the plunger case have different shapes. The plunger of this embodiment has its end narrowed or tapered to reduced diameter by crowning, while the plunger case has its upper opening beveled.

In the embodiment shown in Fig. 7A, the plungers 4 and 5 have their ends 4a, 5a near the pressure chambers narrowed or tapered, while the upper edges 11a, 12a of the plunger cases 11, 12 are beveled at their openings 11x, 12x. These portions may have an arcuate sectional shape or part of a sine curve or part of a quadratic curve.

In operation, when torque is transmitted from the drive shaft 3 to the plungers 4, 5 and the plungers are reciprocated, the contact points between the plungers 4, 5 and the drive shaft 3 will shift from the central axis of the plungers as shown in Fig. 7B, so that an eccentric load will act on the plungers. The eccentric load causes the plungers 4, 5 to be inclined slightly in the plunger cases while they are reciprocating.

But even if they are inclined, as will be apparent from Fig. 7B, the upper portion of each plunger will never touch the upper edge of the plunger case 11, 12, so that there is no possibility of damage to the plungers 4 and 5. The durability of the plungers thus increases. Similarly, the lower edge of each plunger near the pressure chamber will never tough one side of the inner wall of the plunger case. The inner wall of the plunger case is thus protected against damage.

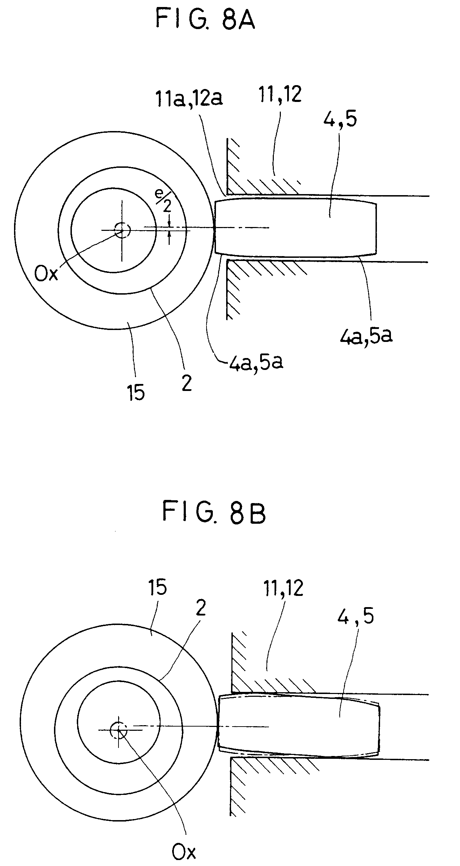

Figs. 8A and 8B are sectional views of another modified embodiment. In this embodiment, the plungers 4, 5 are narrowed or tapered at both ends. But the upper edges of the plunger cases are not beveled. In this embodiment, similar to the embodiment of Figs. 7, the edges of the plungers or the plunger cases will never touch their counterparts even if eccentric loads act on the plungers. Thus, the durability of the plungers is high. Since both ends of the plungers are narrowed, it is possible to prevent the inner wall of the plunger cases from getting damaged by the bottom edge of the plungers.

The return springs used in the pump according to the present invention are not limited to coil springs but may be springs of a type that bridges the opposite plungers as disclosed in Unexamined Japanese Patent Publication 63-195387.

**Claims**

1. A plunger pump comprising an eccentric drive shaft and at least one plunger kept in abutment with said eccentric drive shaft and adapted to be driven to produce fluid pressure when said eccentric drive shaft is rotated, characterized in that the axis of said plunger is offset by a predetermined distance from the center of rotation of said eccentric drive shaft in a direction perpendicular to the axis of said plunger.

2. A plunger pump as claimed in claim 1 wherein said predetermined distance is $e/2$, wherein $e$ is the eccentricity of said eccentric drive shaft.

3. A plunger pump as claimed in claim 1 wherein said predetermined distance is $2e/\pi$ , wherein $e$ is the eccentricity of said eccentric drive shaft.

4. A plunger pump as claimed in claim 1 further comprising a second plunger provided on a diametrically opposite side of said eccentric drive shaft from said at least one plunger and kept in abutment with said eccentric drive shaft, the axes of said plungers being offset by predetermined distances from said center of rotation of said eccentric drive shaft to one side from which said plungers meet said eccentric drive shaft when said eccentric drive shaft rotates.

5. A plunger pump as claimed in claim 4 wherein said predetermined distance for one plunger is substantially equal to that for the other plunger.

6. A plunger pump as claimed in claim 5 wherein said predetermined distance is $e/2$, wherein $e$ is the eccentricity of said eccentric drive shaft.

7. A plunger pump as claimed in claim 5 wherein said predetermined distance is $2e/\pi$ , wherein $e$ is the eccentricity of said eccentric drive shaft.

8. A plunger pump as claimed in any of claims 1-7 wherein said plunger has at least one end tapered to reduced diameter.

9. A plunger pump as claimed in any of claims 1-7 wherein a plunger case in which said plunger is slidably mounted is beveled at near its opening.

10. A plunger pump comprising an eccentric shaft and at least one plunger kept in abutment with said eccentric drive shaft and adapted to be driven to produce fluid pressure when said eccentric drive shaft is rotated, said plunger having at least one end tapered to reduced diameter.

11. A plunger pump comprising an eccentric shaft and at least one plunger kept in abutment with said eccentric drive shaft and adapted to be driven to produce fluid pressure when said eccentric drive shaft is rotated, wherein a plunger case in which said plunger is slidably mounted is beveled at near its opening.

# FIG. 1

EP 0 687 814 A2

## FIG. 2A

## FIG. 2 B

EP 0 687 814 A2

# FIG. 3

Oe(90°)

Oe(45°)

Oe(135°)

e

Oe(0°)

Oe(180°)

Ox

e/2

(0°)

(45°)

(90°)

(135°)

(180°)

e/2

5

X

15a

Plunger center

# FIG. 4A

15
2
5

$e/2$
e

Oe
Ox

Start of
pressurizing

$(0°)$

# FIG. 4B

$e/2 - e/\sqrt{2}$

$(45°)$

# FIG. 4C

$e/2$

$(90°)$

# FIG. 4D

$e/2 - e/\sqrt{2}$

$(135°)$

# FIG. 4E

$e/2$

End of
pressurizing

$(180°)$

EP 0 687 814 A2

## F I G. 5A

Start of
pressurizing

$(0^\circ)$

## F I G. 5B

$(45^\circ)$

## F I G. 5C

$(90^\circ)$

## F I G. 5D

$(135^\circ)$

## F I G. 5E

End of
pressurizing
$(180^\circ)$

# FIG. 6

esinθ

Change in
eccentricity

$\chi$

O     θ     π/2

# FIG. 7A

# FIG. 7B

# FIG. 8A

# FIG. 8B

# FIG. 9

F I G. 10

EP 0 687 814 A2